# FASCICULE DE BREVET EUROPEEN

(11) **EP 3 947 046 B1**
(45) Date de publication et mention de la délivrance du brevet: **10.05.2023**
(21) Numéro de dépôt: 20726176.9
(22) Date de dépôt: 05.03.2020
(51) Int. Cl.: B60R 16/02

(54) **DISPOSITIF DE TRAVERSÉE ÉTANCHE D'UNE GAINE DE CÂBLE AU TRAVERS D'UNE OUVERTURE D'UN TABLIER DE VÉHICULE AUTOMOBILE**
VORRICHTUNG ZUR ABGEDICHTETEN DURCHFÜHRUNG EINES KABELMANTELS DURCH EINE ÖFFNUNG EINER KRAFTFAHRZEUGTRENNWAND
DEVICE FOR THE SEALED LEADTHROUGH OF A CABLE SHEATH THROUGH AN OPENING OF A MOTOR VEHICLE BULKHEAD

(30) Priorité: 25.03.2019 FR 1903090
(43) Date de publication de la demande: 09.02.2022
(73) Titulaire: PSA Automobiles SA, 78300 Poissy (FR)
(72) Inventeur: BROCAL, Sylvain, 90400 Dorans (FR); PRUNET, Jean Baptiste, 90000 Belfort (FR); IBORRA, Pascal, 25550 Bavans (FR)
(86) Numéro de dépôt international: PCT/FR2020/050451
(87) Numéro de publication internationale: WO 2020/193898

(56) Documents cités:
- EP-A2- 1 648 067
- WO-A1-2008/031655
- FR-A1- 2 809 877
- FR-A1- 3 029 706
- FR-A1- 3 066 332

## Description

La présente invention revendique la priorité de la demande française 1903090 déposée le 26 Mars 2019.

### Domaine technique

La présente invention concerne un dispositif de traversée étanche d'une gaine de câble au travers d'une ouverture d'un tablier de véhicule automobile séparant deux compartiments de ce véhicule.

### Technique antérieure

Les véhicules automobiles comportent classiquement un compartiment moteur dans lequel sont disposés, outre le moteur de propulsion du véhicule, divers équipements accessoires ; ainsi qu'un habitacle dans lequel prennent place le conducteur et les passagers.

L'habitacle est généralement séparé du compartiment moteur par un tablier constitué par une paroi en tôle revêtue côté habitacle par une couche de matériau d'insonorisation, elle-même recouverte par un garnissage.

Afin d'assurer la liaison électrique entre les différents équipements électriques et/ou électroniques situés dans l'habitacle et la batterie les alimentant implantée dans le compartiment moteur, il est nécessaire de faire passer un faisceau d'alimentation électrique ou toron regroupant l'ensemble de ces câbles de liaison électrique à travers une ouverture de passage pratiquée dans le tablier du véhicule.

Or, les faisceaux d'alimentation électrique à monter dans les véhicules automobiles sont généralement livrés par les fournisseurs équipés de leurs connecteurs.

Dès lors, lorsque le faisceau doit traverser le tablier, il est nécessaire de prévoir dans celui-ci une ouverture suffisamment large pour faire passer les connecteurs, mais alors le faisceau lui-même a un diamètre beaucoup plus faible que l'ouverture.

Afin d'obtenir une bonne étanchéité et tel que divulgué notamment dans la demande française FR 2 747 449 A1, on monte classiquement de façon étanche sur l'ouverture une pièce de traversée comportant un corps principal en matériau élastomère comprenant un manchon traversant destiné à permettre le passage du faisceau d'alimentation électrique et présentant une partie élargie définissant entre elle et le faisceau une cavité pour l'injection d'un matériau d'enrobage tel que du polyuréthanne à l'intérieur du manchon lui-même de sorte à assurer l'étanchéité entre la pièce de traversée et le faisceau.

En plus de ce faisceau d'alimentation électrique, il peut être nécessaire de faire passer également d'autres éléments au travers du tablier, tel que par exemple la gaine du câble de commande d'ouverture intérieure du capot avant du véhicule (COIC).

Traditionnellement, la gaine du câble COIC traverse le tablier au niveau d'une autre ouverture dédiée pratiquée dans ce tablier et par l'intermédiaire de moyens spécifiques d'étanchéité, ce qui présente de nombreux inconvénients notamment au niveau du nombre de pièces de traversée à utiliser et à monter.

Il est connu, notamment de la demande FR 2 937 192 A1, de faire passer la gaine du câble de commande d'ouverture intérieure du capot avant au travers du corps principal en élastomère de la pièce de traversée assurant le passage du faisceau électrique d'alimentation.

Ce câble COIC étant souvent détérioré en cas de choc avant, ce dernier doit pouvoir être démontée facilement afin d'être remplacé en après-vente, ce qui exclu de réaliser l'étanchéité avec la pièce de traversée par injection d'un matériau d'enrobage (la mise en oeuvre d'une telle opération d'injection n'étant pas envisageable en après-vente).

La demande de brevet française FR 3 066 332 A1 divulgue un insert rigide en matière plastique surmoulé sur la gaine du câble COIC et configuré pour pouvoir être introduit à force au travers d'un perçage correspondant ménagé dans le corps principal en élastomère jusqu'à une configuration montée étanche.

L'insert comprend des moyens de retenue aptes à coopérer avec des moyens complémentaires ménagés sur le corps principal en élastomère de la pièce de traversée pour garantir le maintien axial de l'insert dans sa configuration montée étanche.

Ces moyens de retenue comprennent un évidement annulaire ménagé dans l'insert et destinée à recevoir une nervure annulaire complémentaire saillant radialement à l'intérieur du passage.

A l'usage, ces moyens de retenue s'avèrent toutefois peu efficaces et peuvent entraîner une dégradation de la pièce de traversée en élastomère et en cas de forçage excessif lors de l'introduction de l'insert.

### Exposé de l'invention

La présente invention vise donc à améliorer la situation.

Elle propose à cet effet un dispositif de traversée étanche d'une gaine de câble au travers d'une ouverture d'un tablier de véhicule automobile, comportant une pièce de traversée prévue pour être montée de façon étanche sur ladite ouverture et comprenant un corps principal en matériau élastomère comprenant un perçage traversant, ledit dispositif comportant également un insert allongé rigide surmoulé sur ladite gaine et configuré pour pouvoir être introduit à force au travers dudit perçage jusqu'à une configuration montée étanche, ledit insert comprenant en outre des moyens de retenue aptes à coopérer avec des moyens complémentaires ménagés sur ledit corps principal en élastomère pour garantir le maintien axial de l'insert dans ladite configuration montée étanche ; caractérisé en ce que lesdits moyen de retenue comportent un harpon agencé à l'extrémité aval dudit insert et comprenant une tête munie d'une pluralité de dents aptes à coopérer par encliquetage, lors de l'introduction dudit insert au travers dudit perçage, avec une nervure annulaire saillant radialement à l'intérieur de ce perçage.

L'utilisation d'un tel harpon permet d'assurer une coopération plus douce avec la nervure annulaire lors de la phase d'introduction de l'insert au travers du perçage de sorte à éviter tout risque de détérioration de cette dernière, tout en assurant une retenue anti-retrait satisfaisante de cet insert une fois ce dernier positionné dans sa configuration montée étanche.

Selon des caractéristiques préférées dudit dispositif selon l'invention :
- chaque dite dent est formée par une rampe à profil incurvé en ogive s'étendant jusqu'à un redent ;
- lesdits redents présentent un profil s'inclinant en biais vers l'amont ;
- ladite nervure annulaire présente une section en forme de triangle rectangle ;
- un jeu axial compris entre 1 et 3 mm est prévu entre lesdites dents et ladite nervure annulaire dans ladite configuration montée de l'insert ;
- lesdits moyens de retenue comportent également un épaulement tronconique agencé à l'extrémité amont dudit insert et étant apte à coopérer en butée, en fin d'introduction dudit insert au travers dudit perçage, avec une fraisure tronconique complémentaire réalisée sur l'arête débouchante amont dudit perçage.
- ledit corps principal en élastomère comporte plusieurs godrons annulaires saillant radialement à l'intérieur dudit perçage et aptes à coopérer de manière étanche, dans ladite configuration montée de l'insert, avec la face externe d'au moins une portion d'interface de cet insert ;
- ledit perçage et la au moins dite portion d'interface de l'insert présentent des profils tronconiques ;
- lesdits godrons annulaires présentent une section de forme triangulaire ; et/ou
- ledit insert comporte une bobine de préhension agencée à son extrémité aval et définissant gorge de réception pour un outil tel qu'une pince ou une clé plate.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] est une vue en perspective d'un dispositif selon l'invention de traversée étanche au travers d'une ouverture pratiquée dans un tablier de véhicule automobile ;
[Fig 2] représente une vue en perspective sous un autre angle du dispositif selon l'invention, sur laquelle la partie située à droite d'un plan de coupe passant par l'axe du passage a été arrachée ;
[Fig 3] est une vue en perspective de l'insert seul du dispositif selon l'invention ; et
[Fig 4] est une vue en perspective de l'insert de la figure 3 sous un autre angle.

### Description détaillée

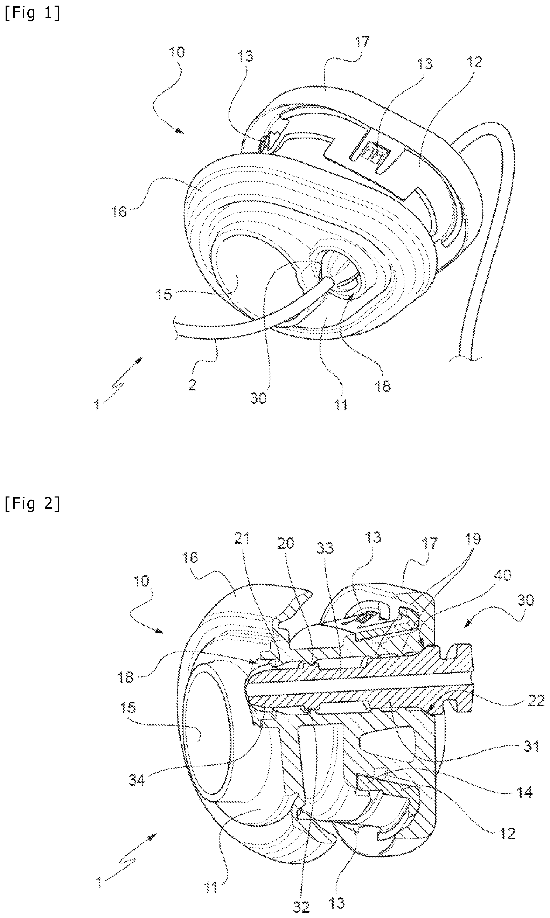

Les figures 1 et 2 montrent un dispositif 1 selon l'invention de traversée étanche au travers d'une ouverture pratiquée dans un tablier avant de véhicule automobile non représenté et séparant le compartiment moteur de l'habitacle de ce véhicule.

Un tel tablier avant est formé classiquement par une tôle à laquelle est associée une plaque, tapis ou analogue en un matériau insonorisant, elle-même recouverte, du côté opposé à la tôle, d'une couche de matériau de finition.

Le dispositif selon l'invention comporte une pièce de traversée 10 comprenant un corps principal en matériau élastomère 11 de section ovoïdale, ainsi qu'une bague 12 en un matériau thermoplastique plus rigide que ce corps principal 11 (par exemple, en polypropylène éventuellement chargé en fibres de verre) et comprenant une pluralité de languettes 13 prévues s'encliqueter sur le bord de l'ouverture ménagée dans le tablier avant afin d'assurer la fixation de cette pièce de traversée 10.

Afin d'améliorer sa tenue sur le corps principal 11 et d'empêcher tout mouvement relatif entre ces deux éléments, la bague 12 comporte avantageusement une pluralité de pattes 14 saillant selon des directions axiales depuis l'un de leurs bords annulaires d'extrémité et étant noyées dans la matière élastomère (voir figure 2).

La pièce de traversée 10 comprend un manchon traversant 15 ménagé dans le corps principal 11 en élastomère, ce manchon 15 étant destiné à permettre le passage d'un faisceau électrique d'alimentation non représenté apte à assurer la liaison électrique entre les différents équipements électriques et/ou électroniques situés dans l'habitacle et la batterie les alimentant implantée dans le compartiment moteur.

Le manchon 15 comprend une partie élargie définissant entre elle et ce faisceau électrique d'alimentation une cavité prévue pour l'injection d'un matériau d'enrobage tel que du polyuréthanne à l'intérieur du manchon lui-même de sorte à assurer l'étanchéité entre la pièce de traversée 10 et le faisceau.

A son extrémité axiale destinée à se trouver à l'intérieur de l'habitacle, le corps principal 11 comprend une première lèvre souple 16 prévue pour à venir en appui contre la face du tablier située côté habitacle en périphérie de l'ouverture.

De même, à son extrémité axiale destinée à se trouver à l'intérieur du compartiment moteur, le corps principal 11 comprend une seconde lèvre souple 17 prévue pour à venir en appui contre la face du tablier située côté compartiment moteur en périphérie de l'ouverture.

La présence de ces deux lèvres souples 16, 17 permet d'assurer une excellente étanchéité acoustique, à l'air et à l'humidité entre le compartiment moteur et l'habitacle à la périphérie de la pièce de traversée 10.

La première lèvre souple 16 est en outre conformée pour pouvoir occuper également une position retournée de montage (non représentée sur les figures) permettant l'engagement de la pièce de traversée 10 au travers de l'ouverture ménagée dans le tablier (cette lèvre étant rabattue par l'opérateur dans sa position normale après la mise en place de la pièce de traversée 10).

La pièce de traversée 10 comprend enfin un perçage traversant 18 ménagé dans le corps principal 11 en élastomère, ce perçage 18 étant délimité par une face latérale dont le diamètre se réduit progressivement suivant un profil tronconique entre sa première extrémité destinée à déboucher côté compartiment moteur et sa seconde extrémité destinée à déboucher côté habitacle.

Outre cette pièce de traversée 10, le dispositif de traversée étanche 1 selon l'invention comporte également un insert rigide allongé 30 en matière plastique surmoulé sur le câble 2 de commande d'ouverture intérieure du capot avant du véhicule, et configuré pour pouvoir être introduit, depuis le compartiment moteur, à force au travers du perçage 18.

Dans la suite de cette description et par convention, les termes « amont » et « aval » seront définis par rapport au sens d'introduction de cet insert 30 dans le perçage 18.

L'insert 30 comprend deux portions tronconiques amont 31 et aval 32 d'interface avec la face latérale du perçage 18, séparées l'une de l'autre par une portion intermédiaire 33 de plus petite section ne coopérant pas avec cette face latérale du perçage 18 de sorte à limiter l'effort d'introduction de cet insert 30 pour l'opérateur en charge du montage. S'étendant sur une plus faible longueur que la portion tronconique amont 31, la portion aval 32 présente un profil tronconique se confondant avec le prolongement aval du profil tronconique de cette portion amont 31. Du fait de sa non interaction avec face latérale du perçage 18, la portion intermédiaire 33 constitue un lieu privilégié d'implantation pour les points d'injection de la matière plastique lors du moulage de l'insert 30 aux niveaux desquels des imperfections de surface peuvent apparaître. Cette portion intermédiaire 33 présente en outre avantageusement une section carrée de sorte à faciliter l'application de marquages de tous types d'informations (numéros de référence ou de série, date, texte, caractéristiques techniques, normes, etc...) sur au moins l'une des ses quatre faces planes.

Afin d'assurer l'étanchéité du montage, le corps principal en élastomère 11 de la pièce de traversée 10 comporte plusieurs godrons annulaires 19, 20 saillant radialement à l'intérieur du perçage 18 depuis sa face latérale et aptes à coopérer de manière étanche dans la configuration montée de l'insert 30 avec les faces externes de ses deux portions tronconiques d'interface 31, 32.

Plus précisément, le corps principal 11 comprend deux godrons annulaires amont 19 coopérant avec la portion tronconique d'interface amont 31 de plus grande longueur, et un godron annulaire aval 20 coopérant avec la portion tronconique d'interface aval 32 de longueur plus réduite.

Le fait de prévoir un nombre plus important de godrons amont 19 permet de s'assurer d'un meilleur centrage axial de l'insert 30 dans le perçage 18.

Les godrons 19, 20 présentent avantageusement une section de forme triangulaire permettant de minimiser les surfaces de contact de ces derniers avec les portions tronconiques d'interface 31, 32 de sorte à réduire l'effort de montage pour l'opérateur tout en assurant un excellent niveau d'étanchéité.

L'insert 30 comporte également des moyens de retenue aptes à coopérer avec des moyens complémentaires ménagés sur le corps principal en élastomère 11 de la pièce de traversée 10 pour garantir la mise en place et le maintien axial de l'insert 30 dans sa configuration montée où l'étanchéité est assurée.

Ces moyens de retenue sont constitués d'un harpon 34 et d'un épaulement 40 agencés respectivement à l'extrémité aval et à l'extrémité amont de l'insert 30.

Le harpon 34 comprend un tronçon cylindrique 36 de prolongeant axialement la portion tronconique d'interface aval 32, ainsi qu'une tête cruciforme 37 surmontant ce tronçon cylindrique 36 et apte à coopérer par encliquetage avec une nervure annulaire 21 du corps principal 11 (voir figure 2) saillant radialement à l'intérieur du perçage 18 depuis la portion d'extrémité aval de sa face latérale de sorte à empêcher le retrait accidentel de l'insert 30 après son montage.

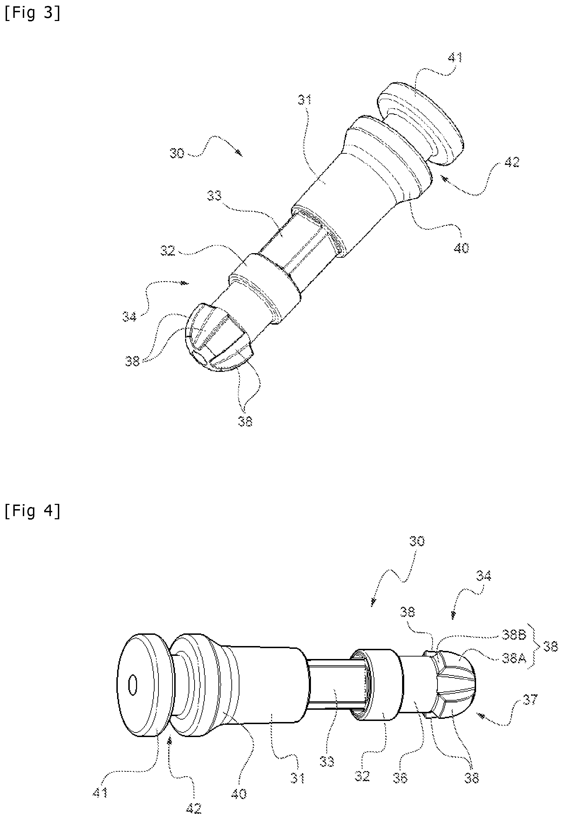

Tel qu'illustré sur les figures 3 et 4, le tronçon cylindrique 36, présente une section circulaire plus petite que celle de l'extrémité aval de la portion tronconique aval 32 de sorte à ne pas coopérer avec la face latérale du perçage 18 et à limiter l'effort d'introduction de l'insert 30 pour l'opérateur en charge du montage.

Toujours en référence aux figures 3 et 4, la tête cruciforme 37 comprend quatre dents de clipsage 38 angulairement réparties de manière régulière sur son pourtour et formées chacune par une rampe à profil incurvé en ogive 38A s'étendant jusqu'à un redent 38B rejoignant le tronçon cylindrique 36.

Cette forme ogivale des dents 38 permet d'assurer une déformation progressive de la nervure annulaire 21 afin de faciliter l'introduction de l'insert 30.

Afin de permettre le retournement de cette nervure annulaire 21 sans qu'elle ne se détériore lors du démontage de l'insert 30, celle-ci présente avantageusement une section en forme de triangle rectangle tandis que les redents 38B présentent un profil s'inclinant en biais vers l'amont.

En outre, et comme cela est visible sur la figure 2, un léger jeu axial est prévu entre les dents 38 du harpon 34 et la nervure annulaire 21 lorsque l'insert 30 occupe sa configuration montée, de sorte à éviter tout risque de désenclipsage de ce harpon 34 du fait de la dilatation du matériau élastomère formant le corps principal 11 de la pièce de traversée 10 sous l'effet des contraintes de température auxquelles elle peut être soumise. Ce jeu est de préférence compris entre 1 et 3 millimètres et avantageusement égal à 2 mm.

Doté d'un profil tronconique dont le diamètre se rétrécit de l'amont vers l'aval, l'épaulement 40 est destiné à coopérer en butée en fin de montage de l'insert 30 avec une fraisure tronconique complémentaire 22 réalisée sur l'arête débouchante amont du perçage 18, de sorte à empêcher l'opérateur d'enfoncer axialement l'insert 30 au-delà de la position souhaitée où l'étanchéité ne serait plus assurée correctement.

Le fait de prévoir des surfaces de contact tronconiques permet de limiter le déplacement axial de l'insert 30 pouvant être causé par la dilatation du matériau élastomère formant le corps principal 11 de la pièce de traversée 10, de sorte préserver l'étanchéité (les godrons annulaires 19, 20 demeurant écrasés contre les faces externes de ses deux portions tronconiques d'interface 31, 32).

L'insert 30 comporte enfin des moyens de préhension agencés à son extrémité aval et aptes à permettre sa saisie au moyen d'un outil tel qu'une pince ou une clé plate de sorte à faciliter son retrait par un opérateur en après-vente si nécessaire.

Ces moyens de préhension sont constitués par une bobine 41 formée d'un moyeu central axial s'étendant entre deux flasques transversaux en forme de disque, et définissant une gorge annulaire de réception 42 pour un tel outil.

Selon des variantes de réalisation non représentés, la tête du harpon est conformé différemment. En particulier, le nombre, le profil et l'agencement de ses dents peuvent varier.

Selon d'autres variantes de réalisation non représentés, le nombre, le profil et les dimensions des portions d'interface de l'insert sont également différents.

Selon encore d'autres variantes de réalisation :
- le perçage ménagé dans le corps principal en élastomère est cylindrique ;
- le nombre et/ou la section des godrons sont différents ; et/ou
- les moyens de préhension sont conformés autrement.

On rappelle enfin que la présente invention ne se limite pas aux formes de réalisation décrites et représentées, mais qu'elle englobe toute variante d'exécution à la portée de l'homme du métier.

## Revendications

1. Dispositif de traversée étanche d'une gaine de câble (2) au travers d'une ouverture d'un tablier de véhicule automobile, comportant une pièce de traversée (10) prévue pour être montée de façon étanche sur ladite ouverture et comprenant un corps principal en matériau élastomère (11) comprenant un perçage traversant (18), ledit dispositif comportant également un insert allongé rigide (30) surmoulé sur ladite gaine (2) et configuré pour pouvoir être introduit à force au travers dudit perçage (18) jusqu'à une configuration montée étanche, ledit insert (30) comprenant en outre des moyens de retenue (34, 40) aptes à coopérer avec des moyens complémentaires ménagés sur ledit corps principal en élastomère (11) pour garantir le maintien axial de l'insert (30) dans ladite configuration montée étanche ; **caractérisé en ce que** lesdits moyen de retenue comportent un harpon (34) agencé à l'extrémité aval dudit insert (30) et comprenant une tête (37) munie d'une pluralité de dents (38) aptes à coopérer par encliquetage, lors de l'introduction dudit insert (30) au travers dudit perçage (18), avec une nervure annulaire (21) saillant radialement à l'intérieur de ce perçage (18).

2. Dispositif de traversée étanche selon la revendication 1, **caractérisé en ce que** chaque dite dent (38) est formée par une rampe à profil incurvé en ogive (38A) s'étendant jusqu'à un redent (38B).

3. Dispositif de traversée étanche selon la revendication 2, **caractérisé en ce que** lesdits redents (38B) présentent un profil s'inclinant en biais vers l'amont.

4. Dispositif de traversée étanche selon l'une des revendications 1 à 3, **caractérisé en ce que** ladite nervure annulaire (21) présente une section en forme de triangle rectangle.

5. Dispositif de traversée étanche selon l'une des revendications 1 à 4, **caractérisé en ce qu'**un jeu axial compris entre 1 et 3 mm est prévu entre lesdites dents (38) et ladite nervure annulaire (21) dans ladite configuration montée de l'insert (30).

6. Dispositif de traversée étanche selon l'une des revendications 1 à 5, **caractérisé en ce que** lesdits moyens de retenue comportent également un épaulement tronconique (40) agencé à l'extrémité amont dudit insert (30) et étant apte à coopérer en butée, en fin d'introduction dudit insert (30) au travers dudit perçage (18), avec une fraisure tronconique complémentaire (22) réalisée sur l'arête débouchante amont dudit perçage (18).

7. Dispositif de traversée étanche selon l'une des revendications 1 à 6, **caractérisé en ce que** ledit corps principal en élastomère (11) comporte plusieurs godrons annulaires (19, 20) saillant radialement à l'intérieur dudit perçage (18) et aptes à coopérer de manière étanche, dans ladite configuration montée de l'insert (30), avec la face externe d'au moins une portion d'interface (31, 32) de cet insert (30).

8. Dispositif de traversée étanche selon la revendication 7, **caractérisé en ce que** ledit perçage (18) et la au moins dite portion d'interface (31, 32) de l'insert (30) présentent des profils tronconiques.

9. Dispositif de traversée étanche selon l'une des revendications 7 ou 8, **caractérisé en ce que** lesdits godrons annulaires (19, 20) présentent une section de forme triangulaire.

10. Dispositif de traversée étanche selon l'une des revendications 1 à 9, **caractérisé en ce que** ledit insert (30) comporte une bobine de préhension (41) agencée à son extrémité aval et définissant gorge de réception pour un outil tel qu'une pince ou une clé plate.

## Patentansprüche

1. Vorrichtung zur dichten Durchführung einer Kabelummantelung (2) durch eine Öffnung in einer Kraftfahrzeugverkleidung, mit einem Durchgangsteil (10), das an der Öffnung dichtend angebracht werden kann und einen Hauptkörper aus elastomerem Material (11) mit einer Durchgangsbohrung (18) aufweist, wobei die Vorrichtung ferner einen länglichen starren Einsatz (30) aufweist, der an die Ummantelung (2) angeformt und so konfiguriert ist, dass er durch die Bohrung (18) in eine dichtend montierte Konfiguration eingepresst werden kann, wobei der Einsatz (30) ferner Haltemittel (34) aufweist, 0), die mit komplementären Mitteln zusammenwirken können, die an dem elastomeren Hauptkörper (11) vorgesehen sind, um den axialen Halt des Einsatzes (30) in der dicht montierten Konfiguration zu gewährleisten; **dadurch gekennzeichnet, dass** die Rückhaltemittel eine Harpune (34) umfassen, die am stromabwärtigen Ende des Einsatzes (30) angeordnet ist und einen Kopf (37) umfasst, der mit einer Vielzahl von Zähnen (38) versehen ist, die beim Einführen des Einsatzes (30) durch die Bohrung (18) mit einer ringförmigen Rippe (21) zusammenwirken können, die absteht Auch innerhalb dieser Bohrung (18).

2. Dichte Durchführungsvorrichtung nach Anspruch 1, **dadurch gekennzeichnet, dass** jeder Zahn (38) durch eine Rampe (38A) mit gekrümmtem Spitzenprofil gebildet ist, die sich bis zu einem Schlitz (38B) erstreckt.

3. Dichte Durchführungsvorrichtung nach Anspruch 2, **dadurch gekennzeichnet, dass** die Schlitze (38B) ein schräg nach stromaufwärts geneigtes Profil aufweisen.

4. Dichte Durchführungsvorrichtung nach einem der Ansprüche 1 bis 3, **dadurch gekennzeichnet, dass** die ringförmige Rippe (21) einen Querschnitt in Form eines rechteckigen Dreiecks aufweist.

5. Dichte Durchführungsvorrichtung nach einem der Ansprüche 1 bis 4, **dadurch gekennzeichnet, dass** ein axiales Spiel zwischen 1 und 3 mm zwischen den Zähnen (38) und der ringförmigen Rippe (21) in der montierten Konfiguration des Einsatzes (30) vorgesehen ist.

6. Vorrichtung zur dichten Durchführung nach einem der Ansprüche 1 bis 5, **dadurch gekennzeichnet, dass** die Rückhaltemittel auch eine kegelstumpfförmige Schulter (40) umfassen, die am stromaufwärtigen Ende des Einsatzes (30) angeordnet ist und geeignet ist, am Ende des Einführens des Einsatzes (30) durch die Bohrung (18) mit einer komplementären kegelstumpfförmigen Fräse (22) zusammenzuwirken, die an der stromaufwärtigen durchgehenden Kante der Bohrung (18) ausgebildet ist.

7. Vorrichtung zur dichten Durchführung nach einem der Ansprüche 1 bis 6, **dadurch gekennzeichnet, dass** der Hauptkörper aus Elastomer (11) mehrere ringförmige Drüsen (19, 20) aufweist, die radial in das Innere der Bohrung (18) vorstehen und in der montierten Konfiguration des Einsatzes (30) dicht mit der Außenseite mindestens eines Schnittstellenabschnitts (31, 32) dieses Einsatzes (30) zusammenwirken können.

8. Dichte Durchführungsvorrichtung nach Anspruch 7, **dadurch gekennzeichnet, dass** die Bohrung (18) und der wenigstens eine Schnittstellenabschnitt (31, 32) des Einsatzes (30) kegelstumpfförmige Profile aufweisen.

9. Dichte Durchführungsvorrichtung nach einem der Ansprüche 7 oder 8, **dadurch gekennzeichnet, dass** die ringförmigen Teer (19, 20) einen dreieckförmigen Querschnitt aufweisen.

10. Dichte Durchführungsvorrichtung nach einem der Ansprüche 1 bis 9, **dadurch gekennzeichnet, dass** der Einsatz (30) eine Greifspule (41) aufweist, die an ihrem stromabwärtigen Ende angeordnet ist und eine Aufnahmenut für ein Werkzeug wie eine Zange oder einen Flachschlüssel definiert.

## Claims

1. Device for the leaktight passage of a cable sheath (2) through an opening of a motor vehicle apron, comprising a passage piece (10) provided to be mounted in a leaktight manner on said opening and comprising a main body made of elastomer material (11) comprising a through-hole (18), said device also comprising a rigid elongate insert (30) overmolded on said sheath (2) and configured to be able to be forced through said hole (18) to a leaktight mounted configuration, said insert (30) further comprising suitable retaining means (34, 40) cooperating with complementary means provided on said main elastomer body (11) to ensure the axial retention of the insert (30) in said sealed mounted configuration; **characterized in that** said retaining means comprise a harpoon (34) arranged at the downstream end of said insert (30) and comprising a head (37) provided with a plurality of teeth (38) capable of cooperating by snap-fastening, when said insert (30) is introduced through said hole (18), with an annular rib (21) projecting radially inside this hole (1) 8).

2. Sealed passage device according to Claim 1, **characterized in that** each said tooth (38) is formed by a ramp with a curved ogival profile (38A) extending as far as a tooth (38B).

3. Sealed passage device according to Claim 2, **characterized in that** the said teeth (38B) have a profile which slopes upstream.

4. Sealed passage device according to one of Claims 1 to 3, **characterized in that** the said annular rib (21) has a cross-section in the form of a right-angled triangle.

5. Sealed passage device according to one of Claims 1 to 4, **characterized in that** an axial clearance of between 1 and 3 mm is provided between the said teeth (38) and the said annular rib (21) in the said mounted configuration of the insert (30).

6. Sealed passage device according to one of Claims 1 to 5, **characterized in that** the said retaining means also comprise a frustoconical shoulder (40) arranged at the upstream end of the said insert (30) and being capable of cooperating in abutment, at the end of the introduction of the said insert (30) through the said bore (18), with a complementary frustoconical countersink (22) formed on the upstream emerging edge of the said bore (18).

7. Sealed passage device according to one of Claims 1 to 6, **characterized in that** the said elastomer main body (11) comprises several annular beads (19, 20) projecting radially inside the said bore (18) and capable of cooperating in a sealed manner, in the said mounted configuration of the insert (30), with the outer face of at least one interface portion (31, 32) of this insert (30).

8. Sealed passage device according to Claim 7, **characterized in that** the said bore (18) and the at least said interface portion (31, 32) of the insert (30) have frustoconical profiles.

9. Sealed passage device according to either of Claims 7 and 8, **characterized in that** the said annular beams (19, 20) have a section of triangular shape.

10. Sealed passage device according to one of Claims 1 to 9, **characterized in that** the said insert (30) comprises a gripping reel (41) arranged at its downstream end and defining a receiving groove for a tool such as a clamp or a flat key.
